# EUROPEAN PATENT APPLICATION

(11) **EP 4 696 450 A1**
(43) Date of publication of application: **18.02.2026**
(21) Application number: 24872754.7
(22) Date of filing: 30.08.2024
(51) Int. Cl.: B23K 26/21, B23K 26/066, B23K 26/03, B23K 26/082, H01M 50/536

(54) **LASER WELDING DEVICE AND OPERATING METHOD THEREFOR**

(30) Priority: 27.09.2023 KR 20230130927
(71) Applicant: LG Energy Solution, Ltd., Seoul 07335 (KR)
(72) Inventor: HWANG, Hae Ho, Daejeon 34122 (KR)
(74) Representative: Goddar, Heinz J.
(86) International application number: PCT/KR2024/012982
(87) International publication number: WO 2025/071046

(57) **Abstract**

A laser welding device according to one embodiment disclosed in the present document comprises: a laser irradiator capable of laser-welding an electrode lead to an electrode tab of an electrode assembly; a mask jig capable of fixing the electrode tab and the electrode lead; a communication circuit capable of communicating with a welding control device; and a processor, wherein the processor can receive a control instruction from the welding control device by using the communication circuit, perform a laser welding process of laser-welding the electrode lead to the electrode tab by using the laser irradiator and the mask jig if the control instruction is a welding control instruction, and perform an image capturing process of capturing the mask jig by using the laser irradiator and the mask jig if the control instruction is a capturing control instruction.

## Description

### TECHNICAL FIELD

### CROSS-REFERENCE TO RELATED APPLICATION

This application claims priority to and the benefit of Korean Patent Application No. 10-2023-0130927 filed in the Korean Intellectual Property Office on September 27, 2023, the entire contents of which are incorporated herein by reference.

### TECHNICAL FIELD

Embodiments disclosed in the present document relate to a laser welding apparatus and a method of operating the same.

### BACKGROUND ART

Recently, research and development have been actively conducted on secondary batteries. In this case, the secondary batteries may be chargeable/dischargeable batteries and interpreted as including Ni/Cd batteries and Ni/MH batteries in the related art and the recent lithium-ion batteries. Among the secondary batteries, the lithium-ion battery advantageously has a much higher energy density than Ni/Cd batteries, Ni/MH batteries, and the like in the related art. In addition, the lithium-ion battery may be manufactured as a small-scale, lightweight battery, such that the lithium-ion battery may be used as a power source for a mobile device. Recently, the range of use of the lithium-ion battery has expanded to a power source for an electric vehicle and attracted attention as a next-generation energy storage medium.

Depending on shapes of battery casings, the secondary batteries may be classified into a cylindrical or angular secondary battery in which an electrode assembly is embedded in a cylindrical or angular metal can, and a pouch-type battery in which an electrode assembly is embedded in a pouch provided in the form of a laminated aluminum sheet.

An electrode assembly of each battery cell may include a plurality of electrodes stacked with separators interposed therebetween. A process of manufacturing the secondary battery may include a welding process.

The welding process may be performed by a laser welding apparatus. The laser welding apparatus may use a mask jig for fixing an object. In general, the mask jig is used for a laser welding process. The mask jig may refer to a pad or lug used to fix the object while the laser welding apparatus performs laser welding on the object. The mask jig used for the laser welding may have at least one opening that may allow a laser beam to be directed toward the object. Selectively, the mask jig may include a slit or another hole for a protective gas such as nitrogen.

The laser welding apparatus melts a welding object by using laser beams in a state in which the welding object is tightly attached and fixed to the mask jig. In this case, the mask jig is contaminated by spatters produced during a process of melting the welding object with laser beams, which may intermittently degrade quality (e.g., tensile strength, external appearances, and the like). In addition, in the related art, an image of a welding partial region (e.g., 1/3 of an entire region) is captured in real time, but image data related to the mask jig for laser welding are not separately collected.

### DISCLOSURE

### TECHNICAL PROBLEM

Embodiments disclosed in the present document may provide a laser welding apparatus capable of performing both a laser welding process of welding an electrode lead to an electrode tab by laser welding and an image capturing process of capturing an image of a mask jig, and a method of operating the same.

Technical problems of the embodiments disclosed in the present document are not limited to the aforementioned technical problems, and other technical problems, which are not mentioned above, may be clearly understood by those skilled in the art from the following descriptions.

### TECHNICAL SOLUTION

A laser welding apparatus according to an embodiment disclosed in the present document may include a laser irradiator configured to laser-weld an electrode lead to an electrode tab of an electrode assembly, a mask jig configured to fix the electrode tab and the electrode lead, a communication circuit configured to communicate with a welding control device, and a processor, in which the processor is configured to: receive a control instruction from the welding control device via the communication circuit, perform a laser welding process of laser-welding the electrode lead to the electrode tab, using the laser irradiator and the mask jig, when the control instruction is a welding control instruction, and perform an image capturing process of capturing an image of the mask jig, using the laser irradiator and the mask jig, when the control instruction is an image capturing control instruction.

In the laser welding apparatus according to the embodiment disclosed in the present document, the laser irradiator may include: a scanner; a laser welding module configured to perform laser welding by using the scanner during the laser welding process; and an image capturing module configured to capture an image of the mask jig by using the scanner during the image capturing process.

In the laser welding apparatus according to the embodiment disclosed in the present document, the processor may use the image capturing module to acquire a plurality of sub-images by capturing images of a plurality of image capturing regions and acquire an analysis image by combining at least some of the plurality of sub-images.

In the laser welding apparatus according to the embodiment disclosed in the present document, the analysis image may be an image of a region including an opening of the mask jig.

In the laser welding apparatus according to the embodiment disclosed in the present document, the image capturing control instruction may be an instruction to acquire the analysis image at a preset cycle.

In the laser welding apparatus according to the embodiment disclosed in the present document, the image capturing control instruction may be an instruction to acquire an image with preset brightness.

In the laser welding apparatus according to the embodiment disclosed in the present document, the processor may transmit an image acquired by the image capturing process, to the welding control device via the communication circuit.

A method of operating a laser welding apparatus according to another embodiment disclosed in the present document may include: receiving a control instruction from a welding control device; performing a laser welding process of laser-welding an electrode lead to an electrode tab of an electrode assembly when the control instruction is a welding control instruction; and performing an image capturing process of capturing an image of a mask jig, which is configured to fix the electrode tab and the electrode lead, when the control instruction is an image capturing control instruction.

In the method of operating the laser welding apparatus according to the embodiment disclosed in the present document, the laser welding apparatus may include: a laser irradiator configured to laser-weld the electrode lead to the electrode tab; and the mask jig, the laser irradiator may include: a scanner; a laser welding module configured to perform laser welding by using the scanner during the laser welding process; and an image capturing module configured to capture an image of the mask jig by using the scanner during the image capturing process.

In the method of operating the laser welding apparatus according to the embodiment disclosed in the present document, the step of performing the image capturing process may include: acquiring a plurality of sub-images by capturing images of a plurality of image capturing regions; and acquiring an analysis image by combining at least some of the plurality of sub-images.

In the method of operating the laser welding apparatus according to the embodiment disclosed in the present document, the analysis image may be an image of a region including an opening of the mask jig.

In the method of operating the laser welding apparatus according to the embodiment disclosed in the present document, the image capturing control instruction may be an instruction to acquire the analysis image at a preset cycle.

In the method of operating the laser welding apparatus according to the embodiment disclosed in the present document, the image capturing control instruction may be an instruction to acquire an image with preset brightness.

The method of operating the laser welding apparatus according to the embodiment disclosed in the present document may further include: transmitting an image acquired by the image capturing process, to the welding control device.

### ADVANTAGEOUS EFFECTS

According to the embodiments disclosed in the present document, it is possible to acquire the image data of the mask jig to quantitatively analyzes a level of spatters accumulating on the mask jig of the laser welding apparatus.

According to the embodiments disclosed in the present document, it is possible to improve the efficiency in acquiring and storing the image data by adjusting brightness, sizes, collection cycles, and the like of the image data of the mask jig.

In addition, various effects that can be directly or indirectly identified through the present document may be provided.

### DESCRIPTION OF DRAWINGS

FIG. 1 is a view exemplarily illustrating a state of a mask jig according to an embodiment.
FIG. 2 is a block diagram illustrating a welding control device and a laser welding apparatus according to the embodiment.
FIG. 3 is a perspective view illustrating a laser irradiator according to the embodiment.
FIG. 4 is a view illustrating an example for explaining a laser welding process performed by the laser welding apparatus according to the embodiment.
FIG. 5 is a view illustrating an image for explaining an image capturing process performed by the laser welding apparatus according to the embodiment.
FIG. 6 is an operational flowchart of the laser welding apparatus according to the embodiment.

### MODE FOR INVENTION

Hereinafter, various embodiments of the present invention disclosed herein will be described with reference to the accompanying drawings. However, the description of the embodiments is not intended to limit the present invention to the particular embodiments, but it should be understood that the present invention is to cover all modifications, equivalents, and/or alternatives of the embodiments of the present invention.

Various embodiments of the present document and the terms used in the embodiments are not intended to limit the technical features disclosed in the present document to the particular embodiments and should be understood as including various alterations, equivalents, or alternatives of the corresponding embodiments. In connection with the description of the drawings, the same or similar reference numerals may be used for the similar components. A singular form of a noun corresponding to an item may include one or more of the items, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Unless specifically stated to the contrary, the terms such as "1st," "2nd," "first," "second," "A," "B," "(a)," or "(b)" may be used to simply distinguish a corresponding component from another component and does not limit the corresponding components in other aspect (e.g., importance or order).

In the present document, when an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

According to various embodiments, each constituent element (e.g., module or program), among the above-mentioned constituent elements, may include a single object or a plurality of objects, and some of the plurality of objects may be disposed separately in different constituent elements. According to various embodiments, one or more constituent elements, among the above-mentioned constituent elements, or operations may be omitted, or one or more other constituent elements or operations may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or a plurality of operations may be executed in a different order or omitted, or one or more other operations may be added.

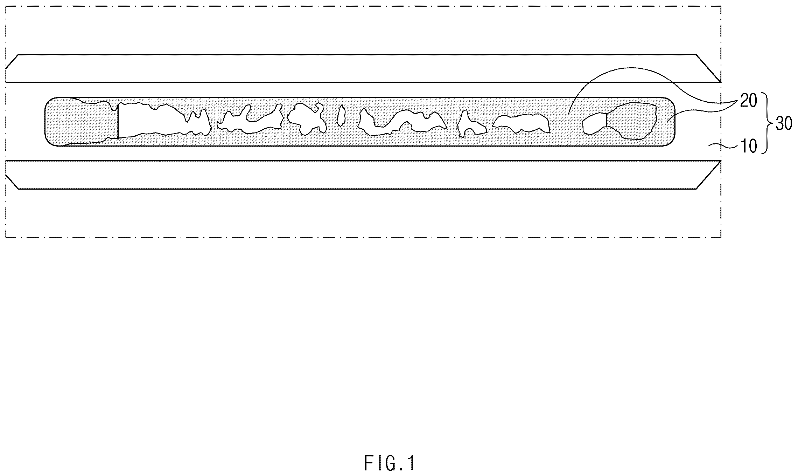

FIG. 1 is a view exemplarily illustrating a state of a mask jig according to an embodiment.

With reference to FIG. 1, a mask jig 30 may include a substrate 10 having a through-hole therein, and a foreign substance layer 20 formed in the through-hole.

The mask jig 30 may refer to a fixing device for fixing an electrode tab and an electrode lead during a process of laser-welding the electrode lead to the electrode tab provided in an electrode assembly during a process of packaging a pouch-type cell. The mask jig 30 may include the substrate 10 having the through-hole therein. The mask jig 30 includes the substrate 10, laser beams for welding for the process of packaging the pouch-type cell may be emitted into the through-hole. In this case, the electrode assembly may refer to an electrode cell made by stacking a positive electrode, a separator, and a negative electrode. The electrode tab may refer to a member configured to connect electrode slurry, which is applied onto the positive electrode or the negative electrode, to the electrode lead.

The foreign substance layer 20 may refer to a layer formed as spatters, which are produced by the electrode tab and the electrode lead during the laser welding during the process of packaging the pouch-type cell, accumulate on the mask jig 30. In this case, the spatters may include molten foreign substances in which molten materials are melted by heat, which is generated during the laser welding, and attached to the mask jig 30, and attached foreign substances in which molten material is attached to the mask jig 30 without being melted. The mask jig 30 may be contaminated by the foreign substance layer 20, which may intermittently degrade quality (e.g., tensile strength, external appearances, and the like). Therefore, it is necessary to ensure image data of an analysis region (e.g., a through-hole region) to analyze in advance the foreign substance layer 20 accumulating on the mask jig 30 and takes an action to prevent a deterioration in quality.

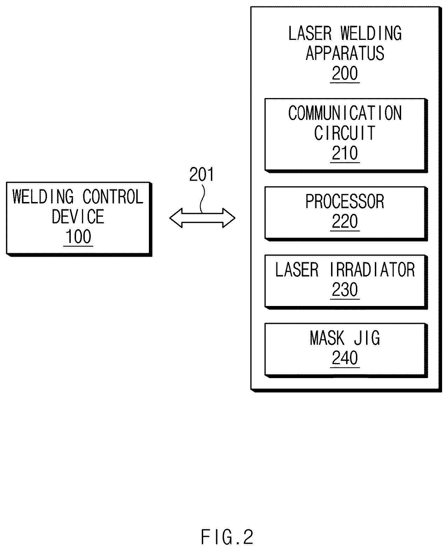

FIG. 2 is a block diagram illustrating a welding control device and a laser welding apparatus according to the embodiment.

With reference to FIG. 2, a laser welding apparatus 200 may be connected to a welding control device 100 in a wired and/or wireless manner.

According to the embodiment, the connection 201 between the laser welding apparatus 200 and the welding control device 100 may be communication connection through a wired and/or wireless network. In the embodiment, the wired network may be based on a local area network (LAN) communication or an electric power line communication. In the embodiment, the wireless network may be based on a local area communication network (e.g., Bluetooth, wireless fidelity (WiFi), or infrared data association (IrDA)) or a distant area communication network (cellular network, 4G network, or 5G network).

According to another embodiment, the connection 201 between the laser welding apparatus 200 and the welding control device 100 may be connection through a device-to-device communication method (e.g., bus, general purpose input and output (GPIO), serial peripheral interface (SPI), or mobile industry processor interface (MIPI)).

According to the embodiment, the welding control device 100 may be a mobile device (e.g., a mobile phone, a laptop computer, a smartphone, a smart pad, or the like) or a personal computer (PC). According to the embodiment, the welding control device 100 may transmit a control instruction to the laser welding apparatus 200 through the connection 201. According to the embodiment, the control instruction may include a welding control instruction for the laser welding apparatus 200 to perform a laser welding process, and/or an image capturing control instruction for the laser welding apparatus 200 to capture an image of the mask jig 220.

According to the embodiment, the laser welding apparatus 200 may include a communication circuit 210, a processor 220, a laser irradiator 230, and a mask jig 240.

According to the embodiment, the communication circuit 210 may establish a wired and/or wireless communication channel (e.g., the connection 201) between the laser welding apparatus 200 and the welding control device 100 and transmit and receive data to and from the welding control device 100 through the established communication channel. According to the embodiment, the communication circuit 210 may receive the control instruction from the welding control device 100. According to the embodiment, the communication circuit 210 may transmit an image, which is acquired by an image capturing process of a welding control device 200 to be described below, to the welding control device 100.

According to the embodiment, the processor 220 may include a central processing unit, an application processor, a graphic processing device, a neural processing device (NPU), an image signal processor, a sensor hub processor, or a communication processor. According to the embodiment, the processor 220 may control at least one of the other constituent elements (e.g., hardware or software constituent elements) of the laser welding apparatus 200 connected to the processor 220 by executing software stored in a memory (not illustrated).

According to the embodiment, the processor 220 may perform the laser welding process and/or the image capturing process in response to the control instruction received from the welding control device 100 by using the communication circuit 210.

According to the embodiment, the processor 220 may identify the control instruction and perform only one of the laser welding process and the image capturing process. For example, in case that the control instruction is the welding control instruction, the processor 220 may perform the laser welding process of laser-welding the electrode lead to the electrode tab by using the laser irradiator 230, the mask jig 240, and/or other components (e.g., a cell transfer device and the like). In case that the control instruction is the image capturing control instruction, the processor 220 may perform the image capturing process of capturing an image of the mask jig 240 by using the laser irradiator 230, the mask jig 240, and/or other components.

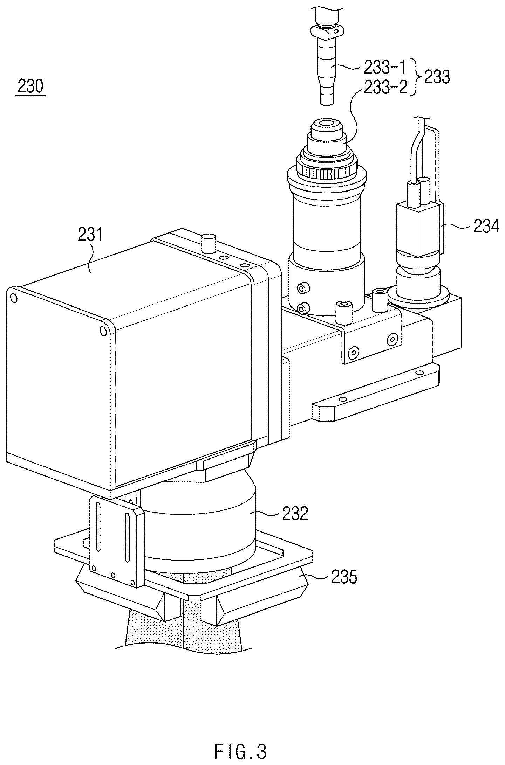

Hereinafter, the laser welding apparatus 200 and a configuration of the laser irradiator 230 included in the laser welding apparatus 200 will be described with reference to FIG. 3. In addition, an operation of at least one constituent element included in the laser irradiator 230 to be described below may be an operation controlled by the processor 220.

FIG. 3 is a perspective view illustrating the laser irradiator according to the embodiment.

With reference to FIG. 3, the laser irradiator 230 may include a scanner 231, a lens 232, a laser welding module 233, an image capturing module 234, and/or a lighting module 235.

According to the embodiment, the scanner 231 may use at least one inner mirror (not illustrated) and the lens 232 to irradiate an object with laser beams transmitted from the laser welding module 233 or transmit light, which is reflected by an image capturing target object, to the image capturing module 234. For example, at least one inner mirror (not illustrated) may be a galvanometer mirror. In this case, the scanner 231 may adjust a region, which is to be irradiated with welding laser beams, or an image capturing region in an X-axis direction and/or a Y-axis direction by adjusting an angle of at least one inner mirror (not illustrated).

According to the embodiment, the laser welding module 233 may perform laser welding on the electrode tab and the electrode lead by using the scanner 231 during the laser welding process.

According to the embodiment, the laser welding module 233 may include a laser fiber 233-1 configured to output welding laser beams, and a collimator 233-2 configured to bring the welding laser beams, which are outputted by the laser fiber 233-1, into a parallel state and propagate the welding laser beams toward the scanner 231. The scanner 231 may irradiate the welding object (e.g., a junction portion between the electrode tab and the electrode lead) with the welding laser beams propagated from the laser welding module 233.

According to the embodiment, the image capturing module 234 may capture an image of the mask jig (e.g., the mask jig 240 in FIG. 2) by using the scanner 231 during the image capturing process. For example, the image capturing module 234 may capture an image of the image capturing target object by acquiring light, which is reflected from the image capturing target object (e.g., the mask jig 240 in FIG. 2), through the scanner 231.

According to the embodiment, the lighting module 235 may emit light to the image capturing target object during the image capturing process. According to the embodiment, the lighting module 235 may adjust brightness of light to be emitted to acquire an image with preset brightness. For example, the image capturing control instruction may be an instruction to acquire an image with preset brightness. In this case, the processor 220 may adjust brightness of light outputted by the lighting module 235 so that an image with preset brightness is acquired by the image capturing process of the image capturing module 234.

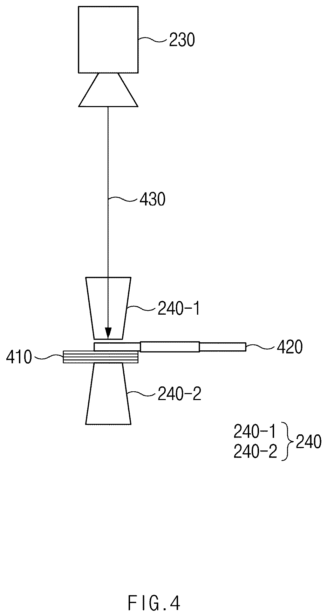

Hereinafter, the laser welding process performed by the laser welding apparatus 200 will be described with reference to FIG. 4.

FIG. 4 is a view illustrating an example for explaining the laser welding process performed by the laser welding apparatus according to the embodiment.

With reference to FIG. 4, the laser welding apparatus 200 may identify the laser welding process in which the laser irradiator 230 and the mask jig 240 are used to laser-weld an electrode lead 420 to an electrode tab 410 provided in an electrode assembly.

According to the embodiment, the laser welding process may include a cell transfer device loading process, an electrode lead loading process, a first mask jig moving process, a pressing process, a laser irradiation process, and a second mask jig moving process. According to the embodiment, the laser welding apparatus 200 may perform the laser welding process by sequentially performing the processes included in the laser welding process.

During the cell transfer device loading process, the laser welding apparatus 200 may load a cell transfer device (not illustrated) for transferring the electrode assembly so that the electrode tab 410 provided in the electrode assembly is positioned at a lower end of an upper mask jig 240-1 and an upper end of a lower mask jig 240-2.

During the electrode lead loading process, the laser welding apparatus 200 may load the electrode lead 420 so that the electrode lead 420 is positioned at the lower end of the upper mask jig 240-1 and the upper end of the lower mask jig 240-2. In this case, the laser welding apparatus 200 may adjust a position of the electrode lead 420 so that a junction portion of the electrode tab 410 and a junction portion of the electrode lead 420 are joined to each other. In addition, the laser welding apparatus 200 may adjust a position of the electrode tab 410 and a position of the electrode lead 420 so that the junction portions are positioned in a through-hole of the upper mask jig 240-1.

During the first mask jig moving process, the laser welding apparatus 200 may move the mask jig 240 so that the mask jig 240 adjoins the electrode tab 410 and/or the electrode lead 420. For example, the laser welding apparatus 200 may lower the upper mask jig 240-1 and raise the lower mask jig 240-2 so that the mask jig 240 adjoins the electrode tab 410 and/or the electrode lead 420.

During the pressing process, the laser welding apparatus 200 may allow the mask jig 240 to press the electrode tab 410 and/or the electrode lead 420 so that the electrode tab 410 and/or the electrode lead 420 are fixed between the upper mask jig 240-1 and the lower mask jig 240-2.

During the laser irradiation process, the laser welding apparatus 200 may laser-weld the electrode lead 420 to the electrode tab 410 by allowing the laser irradiator 230 to emit welding laser beams 430 to the through-hole of the upper mask jig 240-1.

During the second mask jig moving process, the laser welding apparatus 200 may move the mask jig 240 so that the mask jig 240 is positioned at a position set before the laser welding process. For example, the laser welding apparatus 200 may raise the upper mask jig 240-1 to a position set before the laser welding process and lower the lower mask jig 240-2 to a position set before the laser welding process.

Hereinafter, an image capturing process performed by the laser welding apparatus 200 will be described.

According to the embodiment, the image capturing process may include a cell transfer device loading process, a first mask jig moving process, a pressing process, an image capturing process, and a second mask jig moving process. In this case, the image capturing process may include processes identical to the remaining processes excluding the electrode lead loading process and the laser irradiation process of the laser welding process. Therefore, when the time required for the image capturing process is equal to or shorter than the time required for the electrode lead loading process and the time required for the laser irradiation process, the tact time of the image capturing process may be equal to or shorter than the tact time of the laser welding process.

According to the embodiment, the laser welding apparatus 200 may perform the image capturing process by sequentially performing the processes included in the image capturing process. Hereinafter, only the remaining processes, which exclude the first mask jig moving process, the pressing process, and the second mask jig moving process that are identical to the processes of the laser welding process, will be described.

During the cell transfer device loading process, the laser welding apparatus 200 may load the cell transfer device on which the electrode tab is not disposed.

During the image capturing process, the laser welding apparatus 200 may adjust the image capturing region of the scanner 231 in the X-axis direction and/or the Y-axis direction. When the image capturing region of the scanner 231 is focused, the laser welding apparatus 200 may capture an image of the image capturing target object by controlling the image capturing module 234. Thereafter, the laser welding apparatus 200 may adjust the image capturing region of the scanner 231 to an initial region.

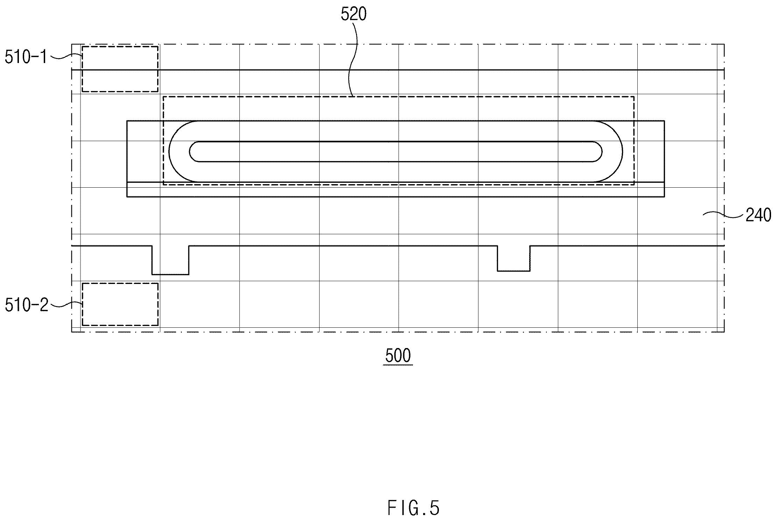

Hereinafter, an operation of capturing, by the laser welding apparatus 200, an image of the mask jig 240, which is the image capturing target object, by using the image capturing module 234 will be described with reference to FIG. 5. The operations of the image capturing module 234, which will be described below, may be operations controlled by the processor 220 included in the laser welding apparatus 200.

FIG. 5 is a view illustrating an image for explaining the image capturing process performed by the laser welding apparatus according to the embodiment.

With reference to FIG. 5, it is possible to identify an image 500 of a cross-section of the mask jig 240 including the through-hole.

According to the embodiment, the image capturing module 234 may acquire a plurality of sub-images by capturing images of a plurality of image capturing regions 510-1, 510-2, and the like. That is, the plurality of sub-images are not images of the entire region of the image 500 but images of partial regions of the image 500 that have the same size.

According to the embodiment, the image capturing module 234 may acquire an analysis image by combining at least some of the plurality of sub-images. In this case, the analysis image may be an image of a region 520 including an opening of the mask jig 240. That is, the image capturing module 234 may acquire the analysis image by combining the sub-images corresponding to the region 520 including the opening among the plurality of sub-images.

According to the embodiment, the image capturing module 234 may acquire the analysis image at each preset cycle. In this case, the preset cycle may be a cycle included in the image capturing control instruction acquired from the welding control device 100 by the communication circuit 210.

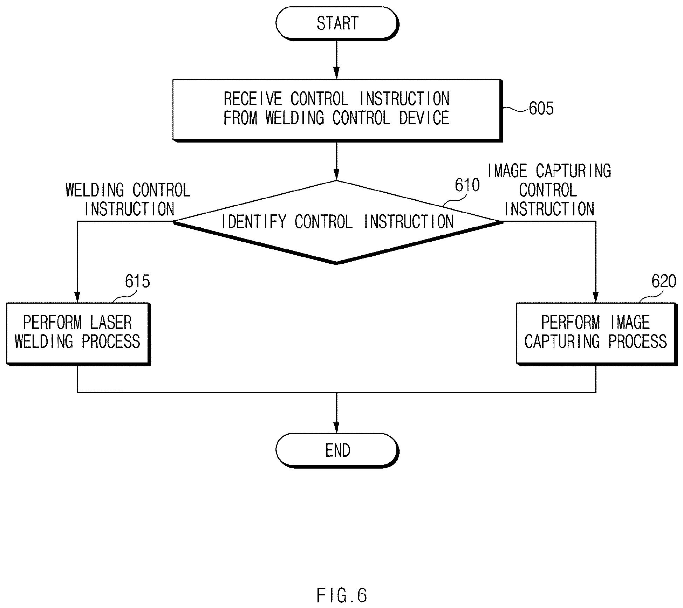

FIG. 6 is an operational flowchart of the laser welding apparatus according to the embodiment. FIG. 6 may be described with reference to the components in FIG. 2.

The embodiment illustrated in FIG. 6 is only one embodiment. The order of the steps according to various embodiments of the present invention may be different from that illustrated in FIG. 6. Some of the steps illustrated in FIG. 6 may be excluded, the order of the steps may be changed, or the steps may be combined.

With reference to FIG. 6, in operation 605, the laser welding apparatus 200 may receive the control instruction from the welding control device 100. According to the embodiment, the control instruction may include the welding control instruction for the laser welding apparatus 200 to perform the laser welding process, and/or the image capturing control instruction for the laser welding apparatus 200 to capture an image of the mask jig 220.

In operation 610, the laser welding apparatus 200 may identify the control instruction received in operation 605.

In case that the control instruction received in operation 610 is identified as the welding control instruction, the laser welding apparatus 200, in operation 615, may perform the laser welding process of laser-welding the electrode lead to the electrode tab by using the laser irradiator 230, the mask jig 240, and/or other components (e.g., the cell transfer device and the like).

In case that the control instruction received in operation 610 is identified as the image capturing control instruction, the laser welding apparatus 200, in operation 620, may perform the image capturing process of capturing an image of the mask jig 240 by using the laser irradiator 230, the mask jig 240, and/or other components.

According to the embodiment, the laser welding apparatus 200 may acquire the plurality of sub-images by capturing images of the plurality of image capturing regions. That is, the plurality of sub-images are not images of the entire region of the image but images of partial regions of the image that have the same size.

According to the embodiment, the laser welding apparatus 200 may acquire the analysis image by combining at least some of the plurality of sub-images. In this case, the analysis image may be an image of the region including an opening of the mask jig 240. That is, the laser welding apparatus 200 may acquire the analysis image by combining the sub-images corresponding to the region including the opening among the plurality of sub-images.

According to the embodiment, the laser welding apparatus 200 may acquire the analysis image at each preset cycle. In this case, the preset cycle may be a cycle included in the image capturing control instruction acquired in operation 605.

According to the embodiment, the laser welding apparatus 200 may transmit the image, which is acquired by the image capturing process, to the welding control device 100.

Unless explicitly described to the contrary, the words "comprise," "include," or "have" and variations such as "comprises," "comprising," "includes," "including," has," or "having," should be understood to imply the inclusion of stated elements but not the exclusion of any other elements. Unless otherwise defined, all terms including technical or scientific terms may have the same meaning as commonly understood by those skilled in the art to which the embodiments disclosed in the present document pertain. The terms such as those defined in a commonly used dictionary may be interpreted as having meanings consistent with meanings in the context of related technologies and may not be interpreted as ideal or excessively formal meanings unless explicitly defined in the present document.

## Claims

1. A laser welding apparatus comprising:
a laser irradiator configured to laser-weld an electrode lead to an electrode tab of an electrode assembly;
a mask jig configured to fix the electrode tab and the electrode lead;
a communication circuit configured to communicate with a welding control device; and
a processor,
wherein the processor is configured to:
receive a control instruction from the welding control device via the communication circuit;
perform a laser welding process of laser-welding the electrode lead to the electrode tab, using the laser irradiator and the mask jig, when the control instruction is a welding control instruction; and
perform an image capturing process of capturing an image of the mask jig, using the laser irradiator and the mask jig, when the control instruction is an image capturing control instruction.

2. The laser welding apparatus of claim 1, wherein the laser irradiator comprises:
a scanner;
a laser welding module configured to perform laser welding by using the scanner during the laser welding process; and
an image capturing module configured to capture an image of the mask jig by using the scanner during the image capturing process.

3. The laser welding apparatus of claim 2, wherein the processor is configured to use the image capturing module to acquire a plurality of sub-images by capturing images of a plurality of image capturing regions and acquire an analysis image by combining at least some of the plurality of sub-images.

4. The laser welding apparatus of claim 3, wherein the analysis image is an image of a region including an opening of the mask jig.

5. The laser welding apparatus of claim 3, wherein the image capturing control instruction is an instruction to acquire the analysis image at a preset cycle.

6. The laser welding apparatus of claim 2, wherein the image capturing control instruction is an instruction to acquire an image with preset brightness.

7. The laser welding apparatus of claim 1, wherein the processor is further configured to transmit an image acquired by the image capturing process to the welding control device via the communication circuit.

8. A method of operating a laser welding apparatus, comprising:
receiving a control instruction from a welding control device;
performing a laser welding process of laser-welding an electrode lead to an electrode tab of an electrode assembly when the control instruction is a welding control instruction; and
performing an image capturing process of capturing an image of a mask jig, the mask jig being configured to fix the electrode tab and the electrode lead, when the control instruction is an image capturing control instruction.

9. The method of claim 8, wherein the laser welding apparatus comprises:
a laser irradiator configured to laser-weld the electrode lead to the electrode tab; and
the mask jig,
wherein the laser irradiator comprises:
a scanner;
a laser welding module configured to perform laser welding by using the scanner during the laser welding process; and
an image capturing module configured to capture an image of the mask jig by using the scanner during the image capturing process.

10. The method of claim 8, wherein the step of performing the image capturing process comprises:
acquiring a plurality of sub-images by capturing images of a plurality of image capturing regions; and
acquiring an analysis image by combining at least some of the plurality of sub-images.

11. The method of claim 10, wherein the analysis image is an image of a region including an opening of the mask jig.

12. The method of claim 10, wherein the image capturing control instruction is an instruction to acquire the analysis image at a preset cycle.

13. The method of claim 8, wherein the image capturing control instruction is an instruction to acquire an image with preset brightness.

14. The method of claim 8, further comprising:
transmitting an image acquired by the image capturing process, to the welding control device.
